# EUROPEAN PATENT APPLICATION

(11) **EP 4 707 052 A1**
(43) Date of publication of application: **11.03.2026**
(21) Application number: 24873855.1
(22) Date of filing: 27.11.2024
(51) Int. Cl.: B60L 53/302

(54) **THERMAL MANAGEMENT SYSTEM FOR ENERGY STORAGE CHARGING PILE, AND ENERGY STORAGE CHARGING PILE**

(30) Priority: 19.07.2024 CN 202421713550 U
(71) Applicant: Contemporary Amperex Technology Co., Limited, Ningde, Fujian 352100 (CN); Contemporary Amperex Future Energy Technology (Shenzhen) Limited, Shenzhen, Guangdong 518100 (CN)
(72) Inventor: WU, Kai, Ningde, Fujian 352100 (CN); HUANG, Wenlong, Ningde, Fujian 352100 (CN); CHENG, Yong, Ningde, Fujian 352100 (CN); WANG, Pengmin, Ningde, Fujian 352100 (CN); CHEN, Zhuo, Ningde, Fujian 352100 (CN); LI, Miao, Ningde, Fujian 352100 (CN)
(74) Representative: Ziebig Hengelhaupt Intellectual Property Attorneys Patentanwaltskanzlei PartGmbB
(86) International application number: PCT/CN2024/134991
(87) International publication number: WO 2026/016370

(57) **Abstract**

Embodiments of the present disclosure provide an energy storage charging pile thermal management system and an energy storage charging pile. The system includes: a first liquid cooling loop in which a first cooling pipeline passes through a battery and a heat exchange module, where a first coolant in the first cooling pipeline is an insulating liquid or a non-insulating liquid; and a second liquid cooling loop in which a second cooling pipeline passes through a charging module and the heat exchange module, where a second coolant in the second cooling pipeline is an insulating liquid. The first cooling pipeline and the second cooling pipeline perform heat exchange through the heat exchange module. A charging converter is electrically connected to the battery, and a charging gun is electrically connected to the charging converter through a charging wiring harness. The charging module includes the charging gun and the charging wiring harness, the charging gun being electrically connected to the battery through the charging wiring harness; and the second cooling pipeline is disposed along the charging wiring harness and passes through the charging gun. In this way, in the event of coolant leakage caused by damage to the charging wiring harness, the use of insulating second coolant for cooling can reduce the occurrence of electrical leakage.

## Description

### CROSS-REFERENCE TO RELATED APPLICATIONS

The present disclosure is filed based on and claims priority to Chinese Patent Application No. 202421713550.3 filed on July 19, 2024 and entitled "ENERGY STORAGE CHARGING PILE THERMAL MANAGEMENT SYSTEM AND ENERGY STORAGE CHARGING PILE", which is incorporated herein by reference in its entirety.

### TECHNICAL FIELD

The present disclosure relates to, but is not limited to, the field of energy storage, and in particular, to an energy storage charging pile thermal management system and an energy storage charging pile.

### BACKGROUND

During the charging or driving process of an electric vehicle, to prevent the overall performance of the vehicle from being affected by overheating of the energy storage system and the charging system, or to avoid extremely low efficiency caused by overcooling, the energy storage system and the charging system must be maintained within an appropriate temperature range under various operating conditions. In the related art, the energy storage system and the charging system are connected using the same thermal management system pipeline. If the charging gun wiring harness is subjected to external crushing, leakage of coolant may occur, leading to potential electric shock safety accidents.

### SUMMARY OF THE INVENTION

In view of this, the embodiments of the present disclosure at least provide an energy storage charging pile thermal management system and an energy storage charging pile.

Technical solutions of the embodiments of the present disclosure are implemented as follows.

An embodiment of the present disclosure provides an energy storage charging pile thermal management system. The system includes:
a first liquid cooling loop, a second liquid cooling loop, and a heat exchange module, where
the first liquid cooling loop includes a first cooling pipeline, the first cooling pipeline passing through a battery in an energy storage charging pile and the heat exchange module, where a first coolant in the first cooling pipeline is an insulating liquid or a non-insulating liquid;
the second liquid cooling loop includes a second cooling pipeline, the second cooling pipeline passing through a charging module in the energy storage charging pile and the heat exchange module, where a second coolant in the second cooling pipeline is an insulating liquid; and
the first cooling pipeline and the second cooling pipeline perform heat exchange through the heat exchange module,
where the charging module includes a charging gun and a charging wiring harness, the charging gun being electrically connected to the battery through the charging wiring harness; and the second cooling pipeline is disposed along the charging wiring harness and passes through the charging gun.

In the energy storage charging pile thermal management system according to embodiments of the present disclosure, in a first liquid cooling loop, a first cooling pipeline passes through a battery in an energy storage charging pile and a heat exchange module, where a first coolant in the first cooling pipeline is an insulating liquid or a non-insulating liquid; and in a second liquid cooling loop, a second cooling pipeline passes through a charging module in the energy storage charging pile and the heat exchange module, where a second coolant in the second cooling pipeline is an insulating liquid. The first cooling pipeline and the second cooling pipeline perform heat exchange through the heat exchange module. The charging module includes a charging gun and a charging wiring harness, the charging gun being electrically connected to the battery through the charging wiring harness; and the second cooling pipeline is disposed along the charging wiring harness and passes through the charging gun. In this way, by separating the thermal management pipelines for the battery and the charging module, in the event of coolant leakage caused by damage to the charging wiring harness, the use of insulating second coolant by the charging module for cooling can reduce the occurrence of electrical leakage.

In some embodiments, the first coolant includes water, and the second coolant includes cooling oil.

In the above embodiment, the first coolant is water, and the second coolant is insulating cooling oil. In this way, the charging module uses cooling oil with high insulation performance as the coolant, which can enhance the safety of the charging module, while the battery uses water with a higher specific heat capacity as the coolant, resulting in a better heat dissipation effect, thereby balancing the safety of the charging module and the cooling effect of the battery.

In some embodiments, the energy storage charging pile thermal management system further includes a charging converter, the first cooling pipeline further passing through the charging converter, where the charging converter is electrically connected to the battery, and the charging gun is electrically connected to the charging converter through the charging wiring harness; and the charging converter is configured to convert electrical energy input by the charging gun and then transmit it to the battery through the charging wiring harness, or to convert electrical energy output by the battery and then transmit it to the charging gun through the charging wiring harness.

In the above embodiment, the first cooling pipeline passes through the charging converter to control the temperature of the charging converter, and the electrical energy transmitted between the battery and the charging gun is converted through the charging converter. In this way, temperature control of the charging converter can be achieved.

In some embodiments, the first cooling pipeline includes a first flow channel flowing through the battery, a second flow channel flowing through the charging converter, and a third flow channel flowing through the heat exchange module, the first flow channel and the second flow channel being connected in parallel, and the first flow channel and the second flow channel being separately connected in series with the third flow channel.

In the above embodiment, the first flow channel and the second flow channel are connected in parallel, and the first flow channel and the second flow channel are separately connected in series with the third flow channel. In this way, heat exchange between the first flow channel and the third flow channel and heat exchange between the second flow channel and the third flow channel can be performed separately.

In some embodiments, the energy storage charging pile thermal management system further includes: a refrigerant loop and a heat dissipation module. The refrigerant loop includes a compressor, a condenser, and a refrigerant pipeline, where the refrigerant pipeline passes through the heat exchange module and the heat dissipation module; and the compressor is configured to drive refrigerant within the refrigerant pipeline to circulate; and the refrigerant pipeline exchanges heat from the first cooling pipeline and/or the second cooling pipeline to the heat dissipation module through the heat exchange module.

In the above embodiment, the compressor drives the refrigerant within the refrigerant pipeline to flow through the heat exchange module, thereby exchanging heat from the first cooling pipeline and/or the second cooling pipeline to the heat dissipation module. In this way, by performing heat exchange between the first cooling pipeline, the second cooling pipeline, and the heat dissipation module through the heat exchange module, the temperatures of the battery and the charging module can be controlled within an appropriate range, thereby ensuring the normal operation of the battery and the charging module.

In some embodiments, the heat exchange module includes a three-loop heat exchanger, the three-loop heat exchanger including a first heat exchange loop, a second heat exchange loop, and a third heat exchange loop, where the first heat exchange loop is in communication with the first cooling pipeline, the second heat exchange loop is in communication with the second cooling pipeline, and the third heat exchange loop is in communication with the refrigerant pipeline.

In the above embodiment, the first heat exchange loop is in communication with the first cooling pipeline to exchange heat with the battery; the second heat exchange loop is in communication with the second cooling pipeline to exchange heat with the charging module; and the third heat exchange loop is in communication with the refrigerant pipeline to exchange heat with the heat dissipation module. In this way, heat exchange between the battery, the charging module, and the heat dissipation module is achieved through the three-loop heat exchanger, thereby reducing the loss of heat or cooling.

In some embodiments, the three-loop heat exchanger includes a first heat exchange layer, a second heat exchange layer, and a third heat exchange layer that are disposed in a stacked manner, where the first heat exchange loop is disposed in the first heat exchange layer, the second heat exchange loop is disposed in the second heat exchange layer, and the third heat exchange loop is disposed in the third heat exchange layer.

In the above embodiment, the first heat exchange layer, the second heat exchange layer, and the third heat exchange layer are disposed in a stacked manner, and the first heat exchange layer is provided with the first heat exchange loop, the second heat exchange layer is provided with the second heat exchange loop, and the third heat exchange layer is provided with the third heat exchange loop. This can enable heat transfer between the first heat exchange loop, the second heat exchange loop, and the third heat exchange loop. Furthermore, by disposing the first heat exchange layer, the second heat exchange layer, and the third heat exchange layer in a stacked manner, the implementation of the first heat exchange loop, the second heat exchange loop, and the third heat exchange loop can be simplified.

In some embodiments, the heat exchange module includes a first dual-loop heat exchanger, a second dual-loop heat exchanger, and a third dual-loop heat exchanger, where two heat exchange loops in the first dual-loop heat exchanger are respectively in communication with the first cooling pipeline and the second cooling pipeline; two heat exchange loops in the second dual-loop heat exchanger are respectively in communication with the first cooling pipeline and the refrigerant pipeline; and two heat exchange loops in the third dual-loop heat exchanger are respectively in communication with the second cooling pipeline and the refrigerant pipeline.

In the above embodiment, the two heat exchange loops in the first dual-loop heat exchanger are respectively in communication with the first cooling pipeline and the second cooling pipeline, so as to achieve heat exchange between the first cooling pipeline and the second cooling pipeline; the two heat exchange loops in the second dual-loop heat exchanger are respectively in communication with the first cooling pipeline and the refrigerant pipeline, so as to achieve heat exchange between the first cooling pipeline and the refrigerant pipeline; and the two heat exchange loops in the third dual-loop heat exchanger are respectively in communication with the second cooling pipeline and the refrigerant pipeline, so as to achieve heat exchange between the second cooling pipeline and the refrigerant pipeline.

In some embodiments, the second cooling pipeline is wound around the charging wiring harness.

In the above embodiment, the second cooling pipeline is wound around the charging wiring harness. This allows uniform cooling of the charging wiring harness and the charging gun through the second cooling pipeline.

An embodiment of the present disclosure provides an energy storage charging pile, including a charging module, a battery, a charging converter, and the above energy storage charging pile thermal management system, where the charging converter is electrically connected to the battery, the charging module includes a charging gun and a charging wiring harness, the charging gun being electrically connected to the charging converter through the charging wiring harness; and the charging converter is configured to convert electrical energy input by the charging gun and then transmit it to the battery through the charging wiring harness, or to convert electrical energy output by the battery and then transmit it to the charging gun through the charging wiring harness.

### BRIEF DESCRIPTION OF DRAWINGS

FIG. 1 is a first schematic diagram of a circuit connection of an energy storage charging pile provided in an embodiment of the present disclosure;
FIG. 2 is a first schematic diagram of a composition structure of an energy storage charging pile thermal management system provided in an embodiment of the present disclosure;
FIG. 3 is a second schematic diagram of a composition structure of an energy storage charging pile thermal management system provided in an embodiment of the present disclosure;
FIG. 4 is a second schematic diagram of a circuit connection of an energy storage charging pile provided in an embodiment of the present disclosure;
FIG. 5 is a third schematic diagram of a composition structure of an energy storage charging pile thermal management system provided in an embodiment of the present disclosure;
FIG. 6 is a fourth schematic diagram of a composition structure of an energy storage charging pile thermal management system provided in an embodiment of the present disclosure;
FIG. 7 is a fifth schematic diagram of a composition structure of an energy storage charging pile thermal management system provided in an embodiment of the present disclosure;
FIG. 8 is a sixth schematic diagram of a composition structure of an energy storage charging pile thermal management system provided in an embodiment of the present disclosure;
FIG. 9 is a third schematic diagram of a circuit connection of an energy storage charging pile provided in an embodiment of the present disclosure;
FIG. 10 is a seventh schematic diagram of a composition structure of an energy storage charging pile thermal management system provided in an embodiment of the present disclosure;
FIG. 11 is a schematic diagram of a composition structure of an energy storage charging pile provided in an embodiment of the present disclosure;
FIG. 12 is a schematic diagram of the operation of an energy storage charging pile thermal management system in a battery heating and charging gun cooling mode provided in an embodiment of the present disclosure;
FIG. 13 is a schematic diagram of the operation of the energy storage charging pile thermal management system in a battery cooling and charging gun cooling mode provided in an embodiment of the present disclosure;
FIG. 14 is a schematic diagram of the operation of the energy storage charging pile thermal management system in a battery non-operating and charging gun cooling mode provided in an embodiment of the present disclosure; and
FIG. 15 is a schematic diagram of the operation of the energy storage charging pile thermal management system in a charging gun non-operating and battery cooling mode provided in an embodiment of the present disclosure.

### Description of reference numerals

100. energy storage charging pile thermal management system; 110. battery; 120. heat exchange module; 130. charging module; 131. charging gun; 132. charging wiring harness; 140. first liquid cooling loop; 141. first cooling pipeline; 142. first coolant pump; 143. first flow channel; 144. second flow channel; 145. third flow channel; 150. second liquid cooling loop; 151. second cooling pipeline; 152. second coolant pump; 160. heat dissipation module; 170. refrigerant loop; 171. compressor; 172. condenser; 173. refrigerant pipeline; 180. control module; 190. energy storage charging pile; 191. charging converter; 192. energy storage converter; 301. battery module; 303. heat exchanger; 304. liquid cooling pipeline; 305. water pump; 306. oil cooling pipeline; 307. oil pump; 310. heat dissipation fan; 311. DC/DC; 312. AC/DC; 401. power grid; 402. energy storage interface; 403. DC bus.

### DETAILED DESCRIPTION

It should be noted that, where there is no conflict, the embodiments in the present disclosure and the technical features in the embodiments may be combined with each other. The detailed descriptions in the Detailed Description section should be understood as interpretive explanations of the purpose of the present disclosure and should not be regarded as undue limitations on the present disclosure.

Unless otherwise defined, all technical and scientific terms used herein have the same meanings as commonly understood by those skilled in the art in the present application. The terms used herein are intended only for the purpose of describing specific embodiments and are not intended to limit the present disclosure. The terms "including" and "having" and any variants thereof in the present disclosure and in the description of drawings above are intended to cover non-exclusive inclusion.

In the description of the embodiments of the present disclosure, the technical terms "first", "second", "third", and the like are only used for distinguishing different objects, and cannot be understood as indicating or implying a relative importance or implicitly specifying the number, particular order, or primary and secondary relation of the technical features indicated. In the description of the embodiments of the present disclosure, "a plurality of' means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. In addition, the character "/" herein generally means that the associated objects before and after it are in an "or" relationship.

In the description of the embodiments of the present disclosure, the technical terms "length", "width", "thickness", "upper", "lower", "front", "rear", "left", "right", "vertical", "horizontal", "top", "bottom", "inner", "outer", "circumferential," "height direction," "first direction," "second direction", and the like indicate orientations or positional relationships based on the orientations or positional relationships shown in the drawings, and are intended only to facilitate and simplify the description of the embodiments of the present disclosure, and are not intended to indicate or imply that the device or element referred to must have a particular orientation, or be constructed, operated, or used in a particular orientation, and therefore should not be construed as limitation of the embodiments of the present disclosure.

In the description of the embodiments of the present disclosure, unless otherwise explicitly specified and defined, the technical terms such as "mount", "connect", "connection" and "fix" should be understood in a broad sense. For example, the connection may be fixed connection, detachable connection or integrated connection, may be mechanical connection or electrical connection, or may be direct connection, indirect connection through an intermediate, internal communication between two elements or interaction relationship between two elements. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be direct contact, or contact through an intermediate layer, or contact between two objects that have little or no interaction force, or contact between two objects that have interaction force.

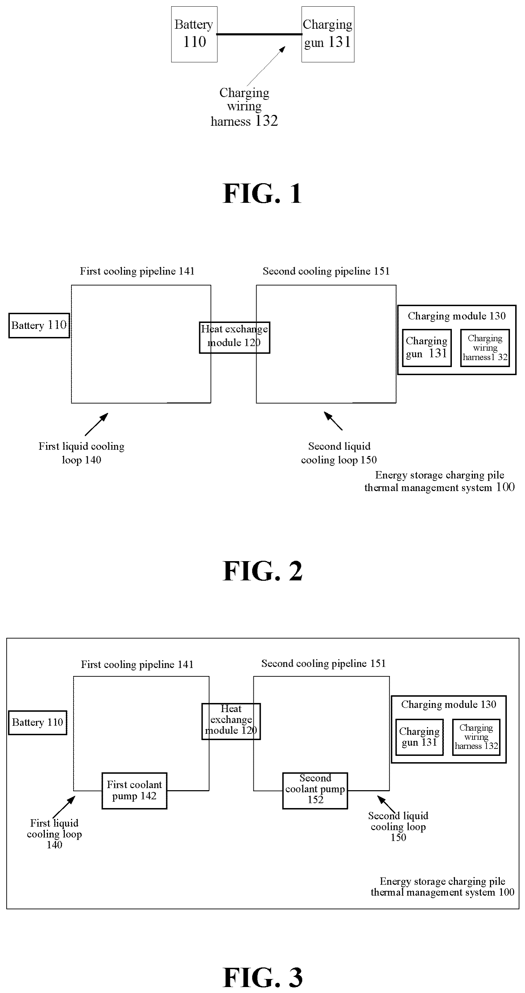

In view of this, an embodiment of the present disclosure provides an energy storage charging pile thermal management system. The energy storage charging pile thermal management system is applied to an energy storage charging pile. FIG. 1 is a first schematic diagram of a circuit connection of an energy storage charging pile provided in an embodiment of the present disclosure. As shown in FIG. 1, the charging module includes a charging gun 131 and a charging wiring harness 132, the charging gun 131 being electrically connected to the battery 110 through the charging wiring harness 132.

In some implementations, the charging wiring harness 131 is placed inside a wiring harness conduit to prevent the charging wiring harness 131 from being subjected to wear, stretching, twisting, or damage from external environments.

In some implementations, the wiring harness conduit may be made of materials such as polyvinyl chloride (PVC), rubber, and nylon.

FIG. 2 is first schematic diagram of a composition structure of an energy storage charging pile thermal management system provided in an embodiment of the present disclosure. As shown in FIG. 2, the energy storage charging pile thermal management system 100 includes: a first liquid cooling loop 140, a second liquid cooling loop 150, and a heat exchange module 120, where:
the first liquid cooling loop 140 includes a first cooling pipeline 141, the first cooling pipeline 141 passing through a battery 110 in an energy storage charging pile and the heat exchange module 120, where a first coolant in the first cooling pipeline 141 is an insulating liquid or a non-insulating liquid;
the second liquid cooling loop 150 includes a second cooling pipeline 151, the second cooling pipeline 151 passing through a charging module 130 in the energy storage charging pile and the heat exchange module 120, where a second coolant in the second cooling pipeline 151 is an insulating liquid; and
the first cooling pipeline 141 and the second cooling pipeline 151 perform heat exchange through the heat exchange module 120,
where the second cooling pipeline 151 is disposed along the charging wiring harness 132 and passes through the charging gun 131.

Here, the first liquid cooling loop 140 is used to control the temperature of the battery 110, including heating and cooling the battery 110, to control the temperature of the battery 110 within an appropriate range, thereby improving the performance of the battery 110 and extending the service life of the battery 110.

Here, the first cooling pipeline 141 contains a first coolant, which circulates within the first cooling pipeline 141 and can flow through the battery 110 and the heat exchange module 120.

In some implementations, as shown in FIG. 3, the first liquid cooling loop 140 further includes a first coolant pump 142, the first coolant pump 142 being configured to drive the first coolant within the first cooling pipeline 141 to circulate. The first cooling pipeline 141 passes through the battery 110 and the heat exchange module 120. The first coolant within the first cooling pipeline 141 is driven by the first coolant pump 142 to circulate, thereby performing heat exchange between the battery 110 and the heat exchange module 120.

In some implementations, the first coolant may be an insulating liquid or a non-insulating liquid, such as an ethylene glycol coolant, a propylene glycol coolant, or a silicone-based oil coolant.

Here, the second liquid cooling loop 150 is used to control the temperature of the charging module 130, and can ensure the stability of the temperature of the charging module 130, thereby improving charging efficiency and safety.

Here, the second cooling pipeline 151 contains a second coolant, which circulates within the second cooling pipeline 151 and can flow through the charging module 130 and the heat exchange module 120.

In some implementations, as shown in FIG. 3, the second liquid cooling loop 150 further includes a second coolant pump 152, the second coolant pump 152 being configured to drive the second coolant within the second cooling pipeline 151 to circulate. The second cooling pipeline 151 passes through the charging module 130 and the heat exchange module 120. The second coolant within the second cooling pipeline 151 is driven by the second coolant pump 152 to circulate, thereby performing heat exchange between the charging module 130 and the heat exchange module 120.

In some implementations, the second coolant within the second cooling pipeline 151 is insulating cooling oil, which can prevent electric shock safety accidents caused by leakage of the second coolant.

In some implementations, the first cooling pipeline 141 and the second cooling pipeline 151 perform heat exchange through the heat exchange module 120.

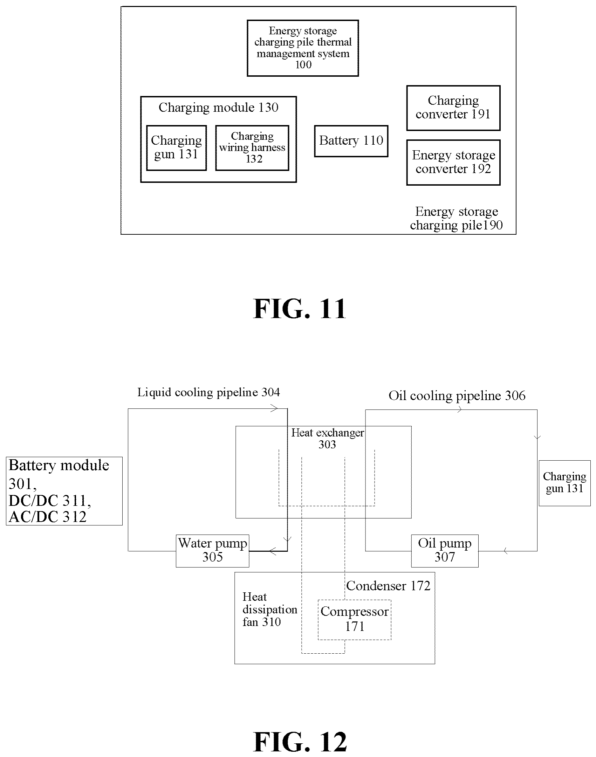

In some implementations, the energy storage charging pile may include multiple batteries (e.g., battery modules) and may also include a direct current-direct current (DC/DC) converter or an alternating current-direct current (AC/DC) converter. For example, as shown in FIG. 12, the first cooling pipeline (e.g., a liquid cooling pipeline 304) can pass through a battery module 301, a DC/DC 311, an AC/DC 312, and a heat exchanger 303 in the energy storage charging pile.

In some implementations, the first cooling pipeline 141 includes a liquid cooling pipeline, for example, the liquid cooling pipeline 304 shown in FIG. 12; and the second cooling pipeline 151 includes an oil cooling pipeline, for example, an oil cooling pipeline 306 shown in FIG. 12.

In some implementations, the first coolant pump 142 may include a water pump, for example, a water pump 305 shown in FIG. 12; and the second coolant pump 152 may include an oil pump, for example, an oil pump 307 shown in FIG. 12.

In some implementations, the heat exchange module 120 may include a three-loop heat exchanger, for example, the heat exchanger 303 shown in FIG. 12.

In some implementations, various types of heat exchangers may be used in the heat exchange module 120, for example, partition-type heat exchangers, shell-and-tube heat exchangers, double-pipe heat exchangers, and other types. The liquids in the two loops undergoing heat exchange remain independent during the heat exchange process and do not come into direct contact or mix.

In some implementations, when the charging module 130 requires cooling and the battery 110 requires heating, heat exchange between the second cooling pipeline 151 and the first cooling pipeline 141 is performed through the heat exchange module 120, thereby achieving exchange of heat from the charging module 130 to the battery 110.

In the embodiments of the present disclosure, the first liquid cooling loop includes a first cooling pipeline, the first cooling pipeline passing through a battery in the energy storage charging pile and the heat exchange module, where a first coolant in the first cooling pipeline is an insulating liquid or a non-insulating liquid; the second liquid cooling loop includes a second cooling pipeline, the second cooling pipeline passing through a charging module in the energy storage charging pile and the heat exchange module, where a second coolant in the second cooling pipeline is an insulating liquid; and the first cooling pipeline and the second cooling pipeline perform heat exchange through the heat exchange module, where the charging module includes a charging gun and a charging wiring harness, the charging gun being electrically connected to the battery through the charging wiring harness; and the second cooling pipeline is disposed along the charging wiring harness and passes through the charging gun. In this way, by separating the thermal management pipelines for the battery and the charging module, in the event of coolant leakage caused by damage to the charging wiring harness, the use of insulating second coolant by the charging module for cooling can reduce the occurrence of electrical leakage.

In some embodiments, the first coolant includes water, and the second coolant includes cooling oil.

In some implementations, the primary function of the coolant is to ensure that the battery and the charging module operate within a normal temperature range.

In some implementations, the second coolant is insulating cooling oil. The insulating cooling oil possesses a high level of insulation performance. It can effectively prevent current leakage, ensuring the normal operation of the battery module, and can avoid electric shock safety accidents caused by leakage of the second coolant.

In the embodiments of the present disclosure, the first coolant is water, and the second coolant is insulating cooling oil. In this way, the charging module uses cooling oil with high insulation performance as the coolant, which can enhance the safety of the charging module, while the battery uses water with a higher specific heat capacity as the coolant, resulting in a better heat dissipation effect, thereby balancing the safety of the charging module and the cooling effect of the battery.

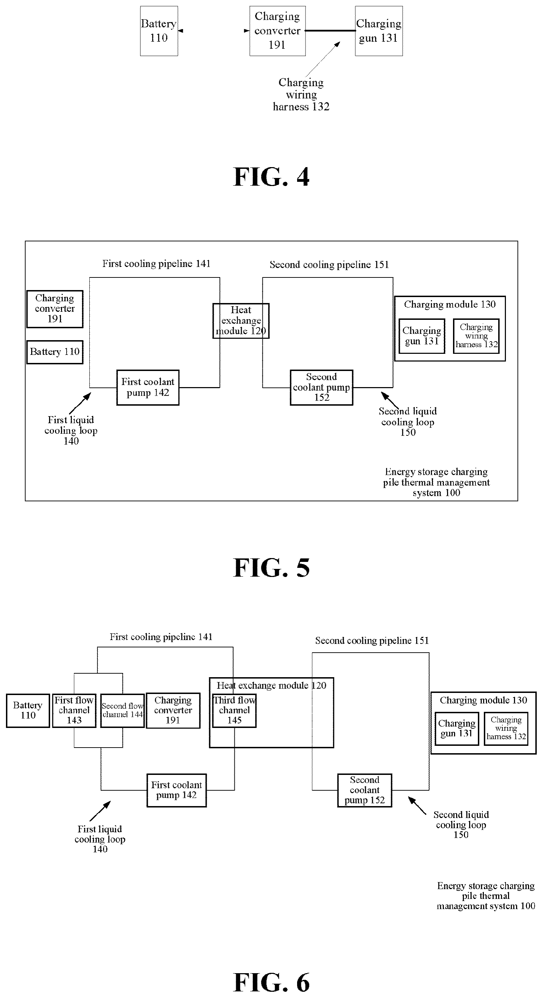

FIG. 4 is a second schematic diagram of a circuit connection of an energy storage charging pile provided in an embodiment of the present disclosure. As shown in FIG. 4, the charging converter 191 is electrically connected to the battery 110, and the charging gun 131 is electrically connected to the charging converter 191 through the charging wiring harness 132. The charging converter 191 is configured to convert electrical energy input by the charging gun 131 and then transmit it to the battery 110 through the charging wiring harness 132, or to convert electrical energy output by the battery 110 and then transmit it to the charging gun 131 through the charging wiring harness 132.

In some embodiments, as shown in FIG. 5, the energy storage charging pile thermal management system further includes a charging converter 191, and the first cooling pipeline 141 further passes through the charging converter 191.

In some implementations, the charging converter may be a DC/DC converter. Due to the low risk of coolant leakage caused by damage to the cooling pipeline flowing through the charging converter, the charging converter is placed in the first liquid cooling loop for temperature control.

In some implementations, in the first cooling pipeline 141, a first flow channel 143 flowing through the battery 110, a second flow channel 144 flowing through the charging converter 191, and a third flow channel 145 flowing through the heat exchange module 120 are separately connected in series to perform heat exchange of the first flow channel 143 and the second flow channel 144 with the third flow channel 145.

In some implementations, the first cooling pipeline flows through the battery, the charging converter, the energy storage converter, and the heat exchange module, enabling the heat or cooling from the heat exchange module to be exchanged to the battery, the charging converter, and the energy storage converter.

In some implementations, in the first cooling pipeline 141, the first flow channel 143 flowing through the battery 110 and the second flow channel 144 flowing through the charging converter 191 are connected in parallel, while the first flow channel 143 and the second flow channel 144 are separately connected in series with the third flow channel 145 flowing through the heat exchange module 120. Control valves can be arranged in the first flow channel 143 and the second flow channel 144 to control whether the first flow channel 143 and the second flow channel 144 exchange heat with the third flow channel 145. In this way, heat exchange between the first flow channel 143 and the third flow channel 145 and heat exchange between the second flow channel 144 and the third flow channel 145 can be performed separately.

In the above embodiment, the first cooling pipeline passes through the charging converter to control the temperature of the charging converter, and the electrical energy transmitted between the battery and the charging gun is converted through the charging converter. In this way, temperature control of the charging converter can be achieved.

In some embodiments, FIG. 6 is a fourth schematic diagram of a composition structure of an energy storage charging pile thermal management system provided in an embodiment of the present disclosure. As shown in FIG. 6, the first cooling pipeline 141 includes the first flow channel 143 flowing through the battery 110, the second flow channel 144 flowing through the charging converter 191, and the third flow channel 145 flowing through the heat exchange module 120. The first flow channel 143 and the second flow channel 144 are connected in parallel, and the first flow channel 143 and the second flow channel 144 are separately connected in series with the third flow channel 145.

In some implementations, in the first cooling pipeline 141, the first flow channel 143 flowing through the battery 110 and the second flow channel 144 flowing through the charging converter 191 are connected in parallel, while the first flow channel 143 and the second flow channel 144 are separately connected in series with the third flow channel 145 flowing through the heat exchange module 120. Control valves can be arranged in the first flow channel 143 and the second flow channel 144 to control whether the first flow channel 143 and the second flow channel 144 exchange heat with the third flow channel 145. In this way, heat exchange between the first flow channel 143 and the third flow channel 145 and heat exchange between the second flow channel 144 and the third flow channel 145 can be performed separately.

In the embodiments of the present disclosure, in the above embodiment, the first flow channel and the second flow channel are connected in parallel, and the first flow channel and the second flow channel are separately connected in series with the third flow channel. In this way, heat exchange between the first flow channel and the third flow channel and heat exchange between the second flow channel and the third flow channel can be performed separately.

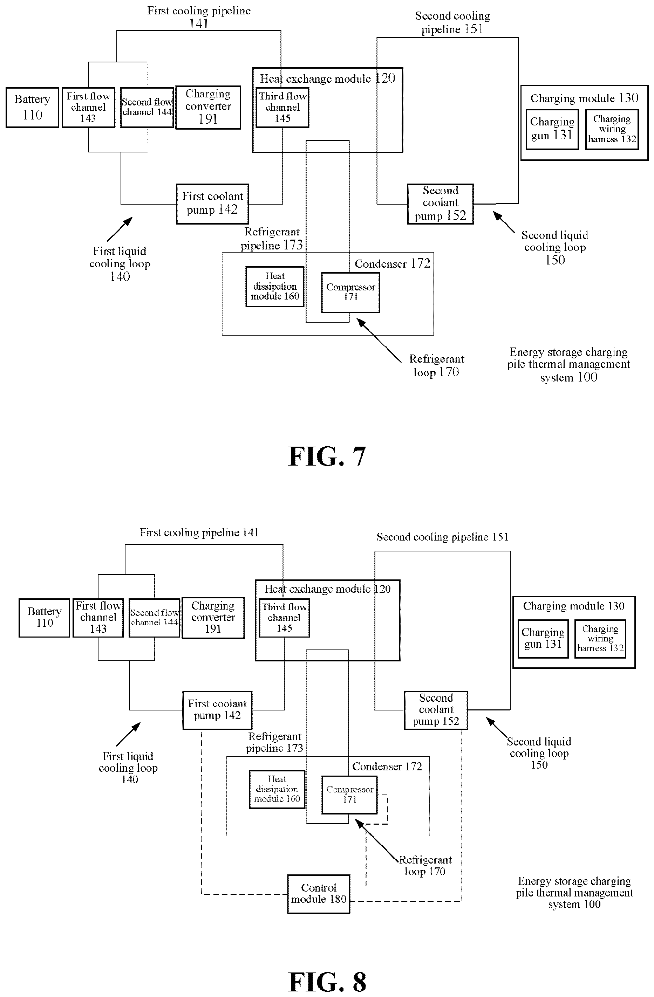

In some embodiments, FIG. 7 is a fifth schematic diagram of a composition structure of an energy storage charging pile thermal management system provided in an embodiment of the present disclosure. As shown in FIG. 7, the energy storage charging pile thermal management system 100 further includes a refrigerant loop 170 and a heat dissipation module 160.

The refrigerant loop 170 includes a compressor 171, a condenser 172, and a refrigerant pipeline 173, where the refrigerant pipeline 173 passes through the heat exchange module 120 and the heat dissipation module 160; and the compressor 171 is configured to drive the refrigerant within the refrigerant pipeline 173 to circulate.

The refrigerant pipeline 173 exchanges the heat from the first cooling pipeline 141 and/or the second cooling pipeline 151 to the heat dissipation module 160 through the heat exchange module 120.

In some implementations, the refrigerant loop 170 drives, through the compressor 171, the refrigerant within the refrigerant pipeline 173 to circulate, exchanging the heat in the heat exchange module 120 to the heat dissipation module 160.

In some implementations, the heat dissipation module 160 may include a heat dissipation fan, such as a heat dissipation fan 310 shown in FIG. 12.

In some implementations, the heat dissipation fan removes the heat inside the charging pile by generating airflow.

In some implementations, the heat dissipation module may further include heat sinks, and with the heat sinks, the heat dissipation area is increased, thereby facilitating the dissipation of heat into the air.

In the embodiments of the present disclosure, the compressor drives the refrigerant within the refrigerant pipeline to flow through the heat exchange module, thereby exchanging heat from the first cooling pipeline and/or the second cooling pipeline to the heat dissipation module. In this way, by performing heat exchange between the first cooling pipeline, the second cooling pipeline, and the heat dissipation module through the heat exchange module, the temperatures of the battery and the charging module can be controlled within an appropriate range, thereby ensuring the normal operation of the battery and the charging module.

In some implementations, as shown in FIG. 8, the operating scenarios of the energy storage charging pile may include at least one of the following:
in the case where the charging module 130 is operating and the battery 110 is not operating, the control module 180 controls the first coolant pump 142 to start, the second coolant pump 152 to start, and the compressor 171 to stop, thereby exchanging heat generated by the charging module 130 during operation to the battery 110 through the second cooling pipeline 151, the heat exchange module 120, and the first cooling pipeline 141, or control the first coolant pump 142 to stop, the second coolant pump 152 to start, and the compressor 171 to start, thereby exchanging heat generated by the charging module 130 during operation to the heat dissipation module 120 through the second cooling pipeline 151, the heat exchange module 120, and the refrigerant pipeline 173;
in the case where both the charging module 130 and the battery 110 are operating, the control module 180 controls the first coolant pump 142 to start, the second coolant pump 152 to start, and the compressor 171 to start, thereby exchanging heat generated by the battery 110 during operation to the heat dissipation module 120 through the first cooling pipeline 141, the heat exchange module 120, and the refrigerant pipeline 173, and exchanging heat generated by the charging module 130 during operation to the heat dissipation module 120 through the second cooling pipeline 151, the heat exchange module 120, and the refrigerant pipeline 173; or
in the case where the charging module 130 is not operating and the battery 110 is operating, the control module 180 controls the first coolant pump 142 to start, the second coolant pump 152 to stop, and the compressor 171 to start, thereby exchanging heat generated by the battery 110 during operation to the heat dissipation module 120 through the first cooling pipeline 141, the heat exchange module 120, and the refrigerant pipeline 173.

In the case where the temperature of the charging module 130 is not lower than a second temperature threshold and the temperature of the battery 110 is lower than a first temperature threshold, the control module 180 controls the first coolant pump 142 to start, the second coolant pump 152 to start, and the compressor 171 to stop, thereby exchanging heat from the charging module 130 to the battery 110 through the second cooling pipeline 151, the heat exchange module 120, and the first cooling pipeline 141, where the second temperature threshold is not lower than the first temperature threshold;
in the case where the temperature of the charging module 130 is not lower than the second temperature threshold and the temperature of the battery 110 is not lower than the first temperature threshold, the control module 180 controls the first coolant pump 142 to stop or start, the second coolant pump 152 to start, and the compressor 171 to start, thereby exchanging heat from the charging module 130 to the heat dissipation module 120 at least through the second cooling pipeline 151, the heat exchange module 120, and the refrigerant pipeline 173; and
in the case where the temperature of the charging module 130 is lower than the second temperature threshold and the temperature of the battery 110 is not lower than the first temperature threshold, the control module 180 controls the first coolant pump 142 to start, the second coolant pump 152 to stop, and the compressor 171 to start, thereby exchanging heat from the battery 110 to the heat dissipation module 120 through the first cooling pipeline 141, the heat exchange module 120, and the refrigerant pipeline 173.

Here, the first temperature threshold is the minimum temperature threshold at which the battery 110 can operate normally. Therefore, in the case where the battery 110 is not operating, if the temperature of the battery 110 is below the first temperature threshold, it is necessary to heat the battery 110 to ensure that the battery 110 can operate properly when it begins operation.

Here, the second temperature threshold is the critical temperature value at which the charging module 130 needs to be cooled down. When the temperature of the charging module 130 is not lower than the second temperature threshold, the charging module 130 needs to be cooled. Conversely, when the temperature of the charging module 130 is below the second temperature threshold, cooling is not required for the charging module 130.

It should be noted that in the case where the temperature of the charging module 130 is not lower than the second temperature threshold, the charging module 130 may be either operating or not operating; and in the case where the temperature of the battery 110 is below the first temperature threshold, the battery 110 may also be either operating or not operating.

In some implementations, when the charging module requires cooling and the battery requires heating, the heat from the charging module is exchanged to the battery through the heat exchange module, thereby improving the heat utilization efficiency of the charging module and reducing the loss of heat.

In some embodiments, the heat exchange module includes a three-loop heat exchanger,
the three-loop heat exchanger including a first heat exchange loop, a second heat exchange loop, and a third heat exchange loop, where
the first heat exchange loop is in communication with the first cooling pipeline, the second heat exchange loop is in communication with the second cooling pipeline, and the third heat exchange loop is in communication with the refrigerant pipeline.

In some implementations, the heat exchange module may include a three-loop heat exchanger, where the first heat exchange loop implements heat exchange between the battery and the heat exchange module; the second heat exchange loop implements heat exchange between the charging module and the heat exchange module; and the third heat exchange loop implements heat exchange between the heat exchange module and the heat dissipation module.

In the embodiments of the present disclosure, the first heat exchange loop is in communication with the first cooling pipeline to exchange heat with the battery; the second heat exchange loop is in communication with the second cooling pipeline to exchange heat with the charging module; and the third heat exchange loop is in communication with the refrigerant pipeline to exchange heat with the heat dissipation module. In this way, heat exchange between the battery, the charging module, and the heat dissipation module is achieved through the three-loop heat exchanger, thereby reducing the loss of heat or cooling.

In some embodiments, the three-loop heat exchanger includes a first heat exchange layer, a second heat exchange layer, and a third heat exchange layer that are disposed in a stacked manner, where the first heat exchange loop is disposed in the first heat exchange layer, the second heat exchange loop is disposed in the second heat exchange layer, and the third heat exchange loop is disposed in the third heat exchange layer.

In some implementations, the first heat exchange loop, the second heat exchange loop, and the third heat exchange loop are respectively arranged on the first heat exchange layer, the second heat exchange layer, and the third heat exchange layer. The first heat exchange loop, the second heat exchange loop, and the third heat exchange loops are respectively provided with channels for connection to the first liquid cooling circuit, the second liquid cooling circuit, and the refrigerant circuit.

In some implementations, the heights of the first heat exchange layer, the second heat exchange layer, and the third heat exchange layer are staggered from one another and they are thermally conductive. When the coolant flows through the heat exchange loops, heat is transferred through the thermal conductivity of the heat exchange layers.

In some implementations, the present disclosure does not impose limitations on the hierarchical relationship of the heights of the first heat exchange layer, the second heat exchange layer, and the third heat exchange layer.

In the embodiments of the present disclosure, the first heat exchange layer, the second heat exchange layer, and the third heat exchange layer are disposed in a stacked manner, and the first heat exchange layer is provided with the first heat exchange loop, the second heat exchange layer is provided with the second heat exchange loop, and the third heat exchange layer is provided with the third heat exchange loop. This can enable heat transfer between the first heat exchange loop, the second heat exchange loop, and the third heat exchange loop. Furthermore, by disposing the first heat exchange layer, the second heat exchange layer, and the third heat exchange layer in a stacked manner, the implementation of the first heat exchange loop, the second heat exchange loop, and the third heat exchange loop can be simplified.

In some embodiments, the heat exchange module includes a first dual-loop heat exchanger, a second dual-loop heat exchanger, and a third dual-loop heat exchanger, where two heat exchange loops in the first dual-loop heat exchanger are respectively in communication with the first cooling pipeline and the second cooling pipeline; two heat exchange loops in the second dual-loop heat exchanger are respectively in communication with the first cooling pipeline and the refrigerant pipeline; and two heat exchange loops in the third dual-loop heat exchanger are respectively in communication with the second cooling pipeline and the refrigerant pipeline.

In some implementations, the first dual-loop heat exchanger implements heat exchange between the first cooling pipeline and the second cooling pipeline; the second dual-loop heat exchanger implements heat exchange between the first cooling pipeline and the refrigerant pipeline; and the third dual-loop heat exchanger implements heat exchange between the second cooling pipeline and the refrigerant pipeline.

In some implementations, to reduce heat loss, bypass channels are respectively provided on the first cooling pipeline, the second cooling pipeline, and the refrigerant pipeline. When the first cooling pipeline, the second cooling pipeline, or the refrigerant pipeline does not require heat exchange, the corresponding cooling medium flows into the bypass channel instead of entering the heat exchange loop within the heat exchange module.

In the embodiments of the present disclosure, the two heat exchange loops in the first dual-loop heat exchanger are respectively in communication with the first cooling pipeline and the second cooling pipeline, so as to achieve heat exchange between the first cooling pipeline and the second cooling pipeline; the two heat exchange loops in the second dual-loop heat exchanger are respectively in communication with the first cooling pipeline and the refrigerant pipeline, so as to achieve heat exchange between the first cooling pipeline and the refrigerant pipeline; and the two heat exchange loops in the third dual-loop heat exchanger are respectively in communication with the second cooling pipeline and the refrigerant pipeline, so as to achieve heat exchange between the second cooling pipeline and the refrigerant pipeline.

In some embodiments, the second cooling pipeline is wound around the charging wiring harness.

In the embodiments of the present disclosure, the second cooling pipeline is wound around the charging wiring harness. This allows uniform cooling of the charging wiring harness and the charging gun through the second cooling pipeline.

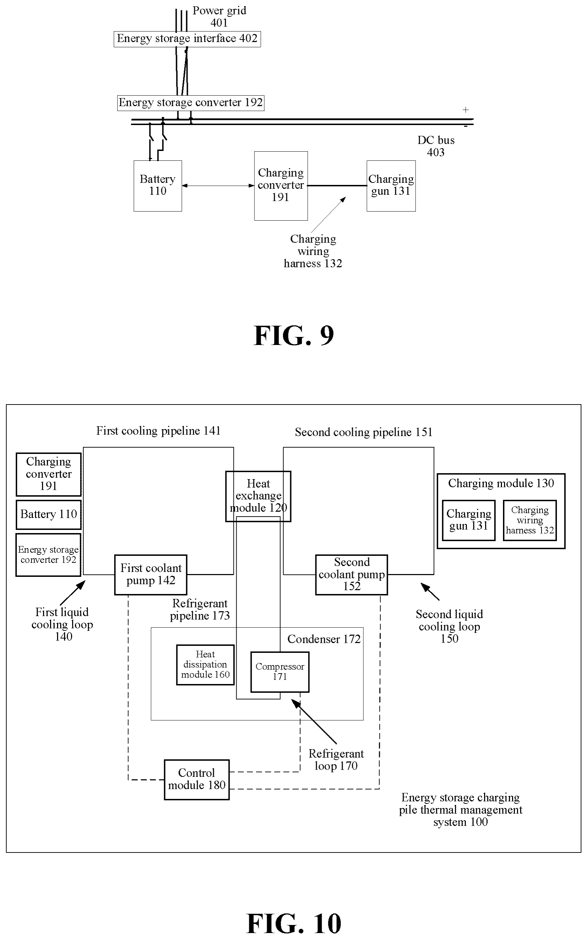

In some embodiments, FIG. 9 is a third schematic diagram of a circuit connection of an energy storage charging pile provided in an embodiment of the present disclosure. As shown in FIG. 9, the energy storage charging pile further includes an energy storage converter 192 and an energy storage interface 402, the energy storage interface 402 being configured to be electrically connected to a power grid 401, and the energy storage converter 192 being separately electrically connected to the battery 110 and the energy storage interface 402 to convert electrical energy input to or output from the battery 110.

In some implementations, the energy storage converter 192 may be an AC/DC converter. The energy storage interface 402 is connected to the power grid 401, and through the energy storage converter 192, electrical energy is converted, thereby transmitting the electrical energy from the power grid 401 to the battery 110.

In some implementations, the electrical energy in the battery 110 can be converted by the energy storage converter 192, and the electrical energy in the battery 110 can be transmitted to the power grid 401 through the energy storage interface 402.

FIG. 10 is a seventh schematic diagram of a composition structure of an energy storage charging pile thermal management system provided in an embodiment of the present disclosure. The first cooling pipeline 141 passes through the battery 110, the charging converter 191, the energy storage converter 192, and the heat exchange module 120.

In some implementations, temperature control for the battery 110, the charging converter 191, and the energy storage converter 192 can be performed through the first cooling pipeline.

In the embodiments of the present disclosure, temperature control for the battery, the charging converter, and the energy storage converter is performed through heat exchange between the first cooling pipeline and the heat exchange module. In this way, the temperatures of the battery, the charging converter, and the energy storage converter can be controlled within an appropriate range.

An embodiment of the present disclosure provides an energy storage charging pile. FIG. 11 is a schematic diagram of a composition structure of an energy storage charging pile provided in an embodiment of the present disclosure. As shown in FIG. 11, the energy storage charging pile 190 includes a charging module 130, a battery 110, a charging converter 191, and the above energy storage charging pile thermal management system 100, where the charging converter 191 is electrically connected to the battery 110, and the charging module 130 includes a charging gun 131 and a charging wiring harness 132, the charging gun 131 being electrically connected to the charging converter 191 through the charging wiring harness 132; and the charging converter 191 is configured to convert electrical energy input by the charging gun 131 and then transmit it to the battery 110 through the charging wiring harness 132, or to convert electrical energy output by the battery 110 and then transmit it to the charging gun 131 through the charging wiring harness 132.

In some implementations, the energy storage charging pile 190 may further include an energy storage converter 192.

In some implementations, the charging gun 131 transmits electrical energy from the energy storage charging pile 190 to the battery of an electric vehicle through the charging wiring harness 132.

In some implementations, as shown in FIG. 9, the energy storage interface 402 is electrically connected to the power grid 401 via a DC bus 403, and the energy storage converter 192 is separately electrically connected to the battery 110 and the energy storage interface 402 to convert electrical energy input to or output from the battery 110. The first cooling pipeline 141 passes through the battery 110, the charging converter 191, the energy storage converter 192, and the heat exchange module 120. The charging converter 191 is electrically connected to the battery 110, and the charging gun 131 is electrically connected to the charging converter 191 through the charging wiring harness 132. The charging converter 191 is configured to convert electrical energy input by the charging gun 131 and then transmit it to the battery 110 through the charging wiring harness 132, or to convert electrical energy output by the battery 110 and then transmit it to the charging gun 131 through the charging wiring harness 132.

The following describes the application of the embodiments of the present disclosure in a practical scenario.

An embodiment of the present disclosure provides an energy storage charging pile thermal management system. This system separates the thermal management pipelines for the energy storage system and the charging system. The charging gun is cooled using insulating cooling oil, thereby addressing electric shock safety accidents caused by coolant leakage from the charging gun. Furthermore, it enables independent heating/cooling control for thermal management of the two systems, allowing control of simultaneous heating of one system and cooling of the other system.

The energy storage charging pile thermal management system can control the energy storage charging pile thermal management system to implement four modes: a battery heating and charging gun cooling mode, a battery cooling and charging gun cooling mode, a battery non-operating and charging gun cooling mode, and a charging gun non-operating and battery cooling mode.

The battery heating and charging gun cooling mode: FIG. 12 is a schematic diagram of the operation of an energy storage charging pile thermal management system in a battery heating and charging gun cooling mode provided in an embodiment of the present disclosure. As shown in FIG. 12, the water pump 305 drives the first coolant to flow in the liquid cooling pipeline 304, passing through the battery module 301, the DC/DC 311, the AC/DC 312, and the heat exchanger 303. The oil pump 307 drives the second coolant to flow in the oil cooling pipeline 306, passing through the charging gun 131 and the heat exchanger 303. The compressor 171 is not started, and the heat generated by the charging gun 131 during operation is exchanged to the liquid cooling pipeline 304 of the energy storage system through the three-loop heat exchanger, thereby implementing the functions of heating the battery module 301, the DC/DC 311, or the AC/DC 312 in the energy storage system, and cooling the charging gun in the charging system.

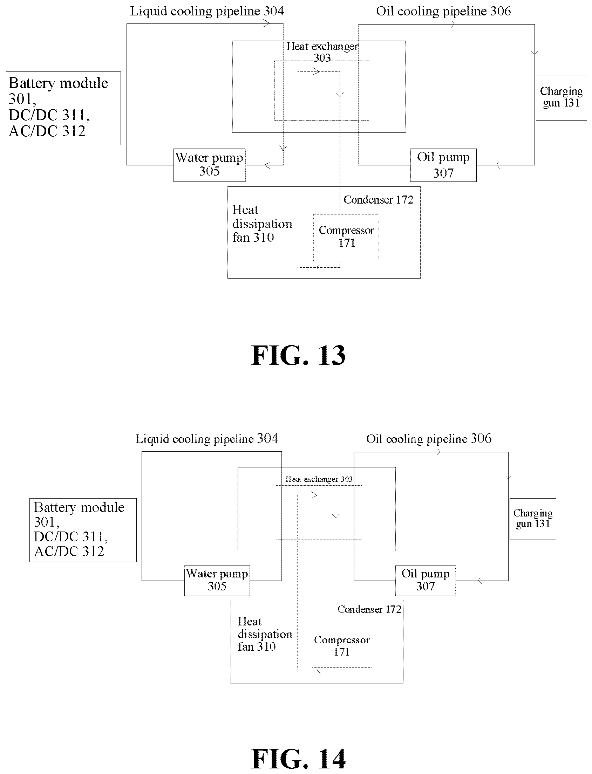

The battery cooling and charging gun cooling mode: FIG. 13 is a schematic diagram of the operation of the energy storage charging pile thermal management system in a battery cooling and charging gun cooling mode provided in an embodiment of the present disclosure. As shown in FIG. 13, the water pump 305 drives the first coolant to flow in the liquid cooling pipeline 304, passing through the battery module 301, the DC/DC 311, the AC/DC 312, and the heat exchanger 303. The oil pump 307 drives the second coolant to flow in the oil cooling pipeline 306, passing through the charging gun 131 and the heat exchanger 303. The compressor 171 is started, and the heat from the charging gun 131, the battery module 301, the DC/DC 311, and the AC/DC 312 is exchanged to the heat dissipation fan 310 through the three-loop heat exchanger, thereby implementing the function of cooling the battery module 301, the DC/DC 311, the AC/DC 312, and the charging gun 131 through the condenser 172 and the heat dissipation fan 310.

The battery non-operating and charging gun cooling mode: FIG. 14 is a schematic diagram of the operation of the energy storage charging pile thermal management system in a battery non-operating and charging gun cooling mode provided in an embodiment of the present disclosure. As shown in FIG. 14, the water pump 305 is stopped, while the oil pump 307 drives the second coolant to flow in the oil cooling pipeline 306, passing through the charging gun 131 and the heat exchanger 303. The compressor 171 is started, and the heat from the charging gun 131 is exchanged to the heat dissipation fan 310 through the three-loop heat exchanger, thereby implementing the function of cooling the charging gun 131 through the condenser 172 and the heat dissipation fan 310.

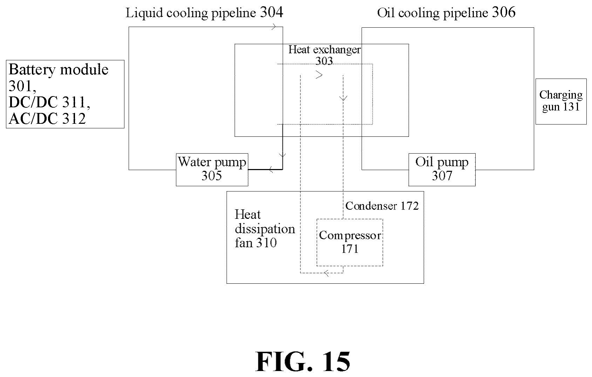

The charging gun non-operating and battery cooling mode: FIG. 15 is a schematic diagram of the operation of the energy storage charging pile thermal management system in a charging gun non-operating and battery cooling mode provided in an embodiment of the present disclosure. As shown in FIG. 15, the water pump 305 drives the first coolant to flow in the liquid cooling pipeline 304, passing through the battery module 301, the DC/DC 311, the AC/DC 312, and the heat exchanger 303. The oil pump 307 is stopped, and the compressor 171 is started, thereby implementing the function of cooling the battery module 301, the DC/DC 311, or the AC/DC 312 through the condenser 172 and the heat dissipation fan 310.

In the embodiments of the present disclosure, the thermal management pipelines for the energy storage system and the charging system are separated. The charging gun is cooled using insulating cooling oil, while the energy storage system is cooled using coolant. This addresses electric shock safety accidents caused by coolant leakage from the charging gun. Furthermore, in the battery heating and charging gun cooling mode, the independent thermal management pipelines enable control of simultaneous heating of one system and cooling of the other system.

In the embodiments of the present disclosure, in the battery heating and charging gun cooling mode, the heat generated by the charging gun during operation can be transferred to the energy storage battery through the oil cooling pipeline, the liquid cooling pipeline, and the heat exchanger, thereby implementing a low-energy consumption heating function for the energy storage battery.

In the description of the present disclosure, descriptions referring to terms such as "in an embodiment," "in some embodiments," "in some other embodiments," "in yet other embodiments," or "exemplary" are intended to indicate that specific features, structures, materials, or characteristics described in connection with that embodiment or example are included in at least one embodiment or example of the embodiments of the present disclosure. In the present disclosure, the illustrative representations of the aforementioned terms are not necessarily directed to the same embodiment or example. Moreover, the specific features, structures, materials, or characteristics described herein may be combined in any one or more embodiments or examples in a suitable manner. Additionally, where there is no conflict, those skilled in the art may combine different embodiments or examples described in the present disclosure and the features of different embodiments or examples.

The above descriptions are merely exemplary embodiments of the present disclosure, but are not intended to limit the present disclosure. It will be apparent to those skilled in the art that various modifications and changes may be made in the present disclosure. Any modifications, equivalent replacements and improvements made within the spirit and principle of the present disclosure shall be included within the scope of protection of the present disclosure.

## Claims

1. An energy storage charging pile thermal management system, comprising:
a first liquid cooling loop, a second liquid cooling loop, and a heat exchange module, wherein
the first liquid cooling loop comprises a first cooling pipeline, the first cooling pipeline passing through a battery in an energy storage charging pile and the heat exchange module, wherein a first coolant in the first cooling pipeline is an insulating liquid or a non-insulating liquid;
the second liquid cooling loop comprises a second cooling pipeline, the second cooling pipeline passing through a charging module in the energy storage charging pile and the heat exchange module, wherein a second coolant in the second cooling pipeline is an insulating liquid; and
the first cooling pipeline and the second cooling pipeline perform heat exchange through the heat exchange module,
wherein the charging module comprises a charging gun and a charging wiring harness, the charging gun being electrically connected to the battery through the charging wiring harness; and the second cooling pipeline is disposed along the charging wiring harness and passes through the charging gun.

2. The energy storage charging pile thermal management system according to claim 1, wherein the first coolant comprises water, and the second coolant comprises cooling oil.

3. The energy storage charging pile thermal management system according to claim 1 or 2, further comprising a charging converter, the first cooling pipeline further passing through the charging converter,
wherein the charging converter is electrically connected to the battery, and the charging gun is electrically connected to the charging converter through the charging wiring harness; and the charging converter is configured to convert electrical energy input by the charging gun and then transmit it to the battery through the charging wiring harness, or to convert electrical energy output by the battery and then transmit it to the charging gun through the charging wiring harness.

4. The energy storage charging pile thermal management system according to claim 3, wherein the first cooling pipeline comprises a first flow channel flowing through the battery, a second flow channel flowing through the charging converter, and a third flow channel flowing through the heat exchange module, the first flow channel and the second flow channel being connected in parallel, and the first flow channel and the second flow channel being separately connected in series with the third flow channel.

5. The energy storage charging pile thermal management system according to any one of claims 1 to 4, further comprising:
a refrigerant loop and a heat dissipation module, wherein
the refrigerant loop comprises a compressor, a condenser, and a refrigerant pipeline, wherein the refrigerant pipeline passes through the heat exchange module and the heat dissipation module; and the compressor is configured to drive refrigerant within the refrigerant pipeline to circulate; and
the refrigerant pipeline exchanges heat from the first cooling pipeline and/or the second cooling pipeline to the heat dissipation module through the heat exchange module.

6. The energy storage charging pile thermal management system according to claim 4, wherein the heat exchange module comprises a three-loop heat exchanger,
the three-loop heat exchanger comprising a first heat exchange loop, a second heat exchange loop, and a third heat exchange loop, wherein
the first heat exchange loop is in communication with the first cooling pipeline, the second heat exchange loop is in communication with the second cooling pipeline, and the third heat exchange loop is in communication with the refrigerant pipeline.

7. The energy storage charging pile thermal management system according to claim 5, wherein the three-loop heat exchanger comprises a first heat exchange layer, a second heat exchange layer, and a third heat exchange layer that are disposed in a stacked manner, wherein
the first heat exchange loop is disposed in the first heat exchange layer, the second heat exchange loop is disposed in the second heat exchange layer, and the third heat exchange loop is disposed in the third heat exchange layer.

8. The energy storage charging pile thermal management system according to claim 4, wherein the heat exchange module comprises a first dual-loop heat exchanger, a second dual-loop heat exchanger, and a third dual-loop heat exchanger, wherein
two heat exchange loops in the first dual-loop heat exchanger are respectively in communication with the first cooling pipeline and the second cooling pipeline;
two heat exchange loops in the second dual-loop heat exchanger are respectively in communication with the first cooling pipeline and the refrigerant pipeline; and
two heat exchange loops in the third dual-loop heat exchanger are respectively in communication with the second cooling pipeline and the refrigerant pipeline.

9. The energy storage charging pile thermal management system according to any one of claims 1 to 8, wherein the second cooling pipeline is wound around the charging wiring harness.

10. The energy storage charging pile thermal management system according to any one of claims 1 to 9, wherein the first liquid cooling loop further comprises a first coolant pump, the first coolant pump being configured to drive the first coolant within the first cooling pipeline to circulate.

11. The energy storage charging pile thermal management system according to any one of claims 1 to 10, wherein the second liquid cooling loop further comprises a second coolant pump, the second coolant pump being configured to drive the second coolant within the second cooling pipeline to circulate.

12. The energy storage charging pile thermal management system according to any one of claims 1 to 11, further comprising:
a control module configured to control start and stop states of the first coolant pump, the second coolant pump, and the compressor based on an operating state of the charging module, an operating state of the battery, the temperature of the charging module, and/or the temperature of the battery.

13. The energy storage charging pile thermal management system according to any one of claim 12, wherein the control module is further configured to:
in the case where the charging module is operating and the battery is not operating, control the first coolant pump to start, the second coolant pump to start, and the compressor to stop, thereby exchanging heat generated by the charging module during operation to the battery through the second cooling pipeline, the heat exchange module, and the first cooling pipeline, or control the first coolant pump to stop, the second coolant pump to start, and the compressor to start, thereby exchanging heat generated by the charging module during operation to the heat dissipation module through the second cooling pipeline, the heat exchange module, and the refrigerant pipeline.

14. The energy storage charging pile thermal management system according to any one of claim 12, wherein the control module is further configured to:
in the case where both the charging module and the battery are operating, control the first coolant pump to start, the second coolant pump to start, and the compressor to start, thereby exchanging heat generated by the battery during operation to the heat dissipation module through the first cooling pipeline, the heat exchange module, and the refrigerant pipeline, and exchanging heat generated by the charging module during operation to the heat dissipation module through the second cooling pipeline, the heat exchange module, and the refrigerant pipeline.

15. The energy storage charging pile thermal management system according to any one of claim 12, wherein the control module is further configured to:
in the case where the charging module is not operating and the battery is operating, control the first coolant pump to start, the second coolant pump to stop, and the compressor to start, thereby exchanging heat generated by the battery during operation to the heat dissipation module through the first cooling pipeline, the heat exchange module, and the refrigerant pipeline.

16. The energy storage charging pile thermal management system according to any one of claim 12, wherein the control module is further configured to:
in the case where the temperature of the charging module is not lower than a second temperature threshold and the temperature of the battery is lower than the first temperature threshold, control the first coolant pump to start, the second coolant pump to start, and the compressor to stop, thereby exchanging heat from the charging module to the battery through the second cooling pipeline, the heat exchange module, and the first cooling pipeline, wherein the second temperature threshold is not lower than the first temperature threshold.

17. The energy storage charging pile thermal management system according to any one of claim 12, wherein the control module is further configured to:
in the case where the temperature of the charging module is not lower than the second temperature threshold and the temperature of the battery is not lower than the first temperature threshold, control the first coolant pump to stop or start, the second coolant pump to start, and the compressor to start, thereby exchanging heat from the charging module to the heat dissipation module at least through the second cooling pipeline, the heat exchange module, and the refrigerant pipeline.

18. The energy storage charging pile thermal management system according to any one of claim 12, wherein the control module is further configured to:
in the case where the temperature of the charging module is lower than the second temperature threshold and the temperature of the battery is not lower than the first temperature threshold, control the first coolant pump to start, the second coolant pump to stop, and the compressor to start, thereby exchanging heat from the battery to the heat dissipation module through the first cooling pipeline, the heat exchange module, and the refrigerant pipeline.

19. An energy storage charging pile, comprising:
a charging module, a battery, a charging converter, and the energy storage charging pile thermal management system according to any one of claims 1 to 9, wherein the charging converter is electrically connected to the battery, and the charging module comprises a charging gun and a charging wiring harness, the charging gun being electrically connected to the charging converter through the charging wiring harness; and the charging converter is configured to convert electrical energy input by the charging gun and then transmit it to the battery through the charging wiring harness, or to convert electrical energy output by the battery and then transmit it to the charging gun through the charging wiring harness.

20. The energy storage charging pile according to claim 19, further comprising an energy storage converter and an energy storage interface, the energy storage interface being configured to be electrically connected to a power grid, and the energy storage converter being separately electrically connected to the battery and the energy storage interface to convert electrical energy input to or output from the battery.
